# EUROPEAN PATENT SPECIFICATION

(11) **EP 2 888 535 B1**
(45) Date of publication and mention of the grant of the patent: **06.01.2021**
(21) Application number: 13745712.3
(22) Date of filing: 30.07.2013
(51) Int. Cl.: F24D 17/00, F28D 20/02, F24S 60/30, F24S 10/75, F24S 10/95, F24S 10/40, F28D 7/08, F28D 15/02, F28D 15/04

(54) **A SOLAR WATER HEATER**
Solar-Wassererwärmer
CHAUFFE-EAU SOLAIRE

(30) Priority: 31.07.2012 GB 201213609; 05.12.2012 GB 201221879
(43) Date of publication of application: 01.07.2015
(73) Proprietor: University Of Ulster, County Londonderry BT52 1SA (GB)
(72) Inventor: SMYTH, Mervyn Alexander, Belfast BT5 6AE (GB)
(74) Representative: Dehns
(86) International application number: PCT/GB2013/052031
(87) International publication number: WO 2014/020328

(56) References cited:
- GB-A- 2 032 613
- US-A- 5 931 156
- DE BEIJER H A: "Product development in solar water heating", RENEWABLE ENERGY, PERGAMON PRESS, OXFORD, GB, vol. 15, no. 1-4, 12 September 1998 (1998-09-12), pages 201-204, XP004138000, ISSN: 0960-1481, DOI: 10.1016/S0960-1481(98)00156-6

## Description

### Field of the Invention

The present invention is concerned with a solar water heater, and preferably, but not exclusively, a solar water heater which is intended to be retrofitted to an existing domestic hot water supply system or the like, in order to reduce the energy requirements of such a system.

### Background of the invention

Conventional solar water heating systems generally consist of a separate solar collector and water store, with pipes connecting the collector(s) to and from store(s). These systems can be either active or passive, with the active systems using an electric pump, and the passive systems relying on buoyancy forces in the form of thermosiphonic action. The collector can be anything from a simple flat plate arrangement, requiring freeze protection, to the more costly evacuated (heat pipe) tube system. The collector is generally connected indirectly to the existing hot water installation and as such requires a twin coil hot water cylinder.

GB 2 032 613 A discloses a solar heating system comprising inner and outer concentrically arranged vessels, wherein phase change material from a solar panel is pumped in a cavity defined between the two vessels in order to promote exchange of heat between the phase change material and the water contained in the inner vessel.

While solar water heating systems are very effective in some environments, in a large number of countries or regions of the world, a combination of low average daily insolation (incident solar radiation) levels and the need for freeze protection measures render commercially available domestic solar water heating systems unsuitable or prohibitively expensive.

Integrated Collector/Storage Solar Water Heater (ICSSWH) systems, due to fewer components resulting from the combination of both solar collection and storage in one compact unit have a significantly reduced overall cost when compared to other solar water heating systems. The large thermal mass of the water store and the associated cooling period gives resistance to freezing in most climates.

Efficient, low-cost ICSSWH systems are key to exploiting the as-yet-undeveloped market for solar water heating in climates such as the UK. Current systems suffer substantial heat loss during periods of low insolation and/or night-time via the large exposed aperture area, reducing the unit's efficiency rendering it less attractive to potential users. ICSSWH system technology can be economically competitive with alternative systems and technologies used currently if this problem is addressed.

In its simplest form the integrated collector storage solar water heater (ICSSWH) is a water tank painted black to absorb insolation. In the past variations consisted of one or more tanks, painted black or coated with a selective absorbing surface, within a well insulated box, possibly with reflectors and covered with single, double or even triple layers of glass, plastic or a combination of the two. Due to its simplicity, an integrated collector/storage system is easier to construct and install which reduces maintenance and capital costs. In most climates, the large thermal mass of the store provides inherent resistance to freezing. However the integrated unit has a significant problem due to its unique mode of operation.

The earliest systems suffered substantially from heat losses to ambient, especially at night-time and non-collection periods. This meant no matter how effective the unit was: in collecting solar energy, unless the hot water was fully withdrawn at the end of the collection period, losses to ambient led to only lukewarm water being available early the next day. This reduced the overall solar fraction rendering it less viable economically. Indeed this deficiency in the late nineteenth century led to the prominence of thermosiphonic solar water heaters with diurnal heat storage to the detriment of the ICSSWH system. To overcome excessive heat loss and be in a position to compete with the more established distributed solar water heater systems, the ICSSWH design has had to evolve and incorporate new and novel methods of improving performance.

The ICSSWH is a common form of water heater in many warmer countries, however, it is virtually non-existent in more: northern latitudes. Previous ICSSWH designers have attempted to; (i) reduce heat loss from the aperture; (ii) reduce convective heat transfer in the collector cavity from the store to the aperture; or (iii) reduce heat transfer from the store surface. Recent studies to reduce night-time thermal losses include the use of two stores, the use of a partially evacuated chamber (De Beijer [1998]), and the use of a double skinned store vessel, and a design that benefits from the upper part of the store being insulated.

The De Beijer [1998] system provided a horizontally mounted solar water heater using water as a liquid/vapour phase change material.

The nearest technology to the proposed system is the SolaCatcher, developed by the current inventor (International Publication number WO 2010/052010 A2, "A solar water heater"). The described invention, which discloses all the features of the preamble of claim 1, uses the same operating principle to pre-heat domestic hot water by catching and storing the energy of the sun. Just like a thermal diode, the design promotes solar collection during the day but reduces thermal losses at night. However the presented invention is an improvement on the previous prior art.

The present invention has been developed to provide a further improved solar water heating apparatus.

The present invention provides a new pre-heat ICS system that provides engineering solutions that can be achieved that improve the heat retention of the ICS system without compromising solar collection efficiency, whilst providing lower system and installation costs, without adding any undue size, weight, complexity or unsightly structure to the user's home.

### Summary of the invention

The present invention therefore, in one aspect, provides a solar water heating apparatus as defined in claim 1, comprising inner and outer concentrically arranged vessels; a cavity defined between the vessels by an outer wall of the inner vessel and an inner wall of the outer vessel; a liquid-to-vapour phase change material provided in the cavity; an inlet for delivering unheated water to the inner vessel; and an outlet for withdrawing heated water from the inner vessel, and means for pumping the phase change material towards the inner wall of the outer vessel. The outlet is provided at an upper portion of the inner vessel and returns through the inner vessel before exiting a lower end of the outer vessel.

The dependent claims define preferred embodiments of the invention.

According to an example not according to the present invention, the advantages are provided by a solar water heating apparatus comprising inner and outer concentrically arranged vessels; a cavity defined between the vessels by an outer wall of the inner vessel and an inner wall of the outer vessel; a liquid-to-vapour phase change material provided in the cavity; an inlet for delivering unheated water to the inner vessel; and an outlet for withdrawing heated water from the inner vessel; wherein a plurality of fins is provided on an outer wall of the outer vessel. Preferably, pockets may be formed inside the cavity, e.g. on the inner wall of the outer vessel, to retain liquid-to-vapour phase change material and to regulate its downward flow.

An inventive aspect of the invention is provided with means for pumping the phase change material towards the inner wall of the outer vessel.

The pumped format creates a uniform, controllable supply of liquid-to-vapour change material, ideally water, preferably, in film form across the heat absorbing/evaporating inner surface of the outer vessel.

Preferably, the means for pumping is a liquid suction pump - most preferably a DC liquid suction pump.

Preferably, the means for pumping is solar powered - most preferably by means of an integral photovoltaic panel.

Preferably, the means for pumping is located towards the base of the apparatus and pumps the liquid form phase change material towards the top of the apparatus. Preferably, the means for pumping produces phase change material in the form of a film or other form that promotes rapid heat transfer and thus evaporation. Preferably, the cavity is partially evacuated (maintains a very low pressure environment).

Preferably, the apparatus comprises at least one reservoir (or liquid receiving form) within the cavity and within which reservoir at least a portion of the phase change material may be retained or redirected to improve the heat transfer and evaporation process.

Preferably, the apparatus comprises multiple reservoirs, e.g. a lower reservoir and an upper reservoir.

Preferably, the apparatus comprises an evacuated compartment disposed within the inner vessel and defining at least one of the reservoirs between the compartment and an inner face of the outer vessel, by direct flow or via a heat exchange mechanism,

The inlet feeds into a lower portion of the inner vessel and the outlet is supplied from an upper portion of the inner vessel.

According to the invention, the outlet returns through the inner vessel before exiting a lower end of the outer vessel.

Preferably, although not claimed, the inlet and the outlet each extend through the outer vessel at a lower end thereof.

Preferably, the apparatus comprises a heat exchanger connected between the inlet and the outlet.

Preferably, although not claimed, the apparatus comprises expansion means to enable the water in the inner vessel to expand as it is heated.

Preferably, a solar radiation absorbent coating is provided on an outer face of the outer vessel,

Preferably, although not claimed, the apparatus comprises a divider disposed within the outer vessel between an upper end of the inner vessel and an upper end of the outer vessel in order to reduce vapour heat transfer losses through the upper end of the outer vessel.

Preferably, the apparatus comprises a transparent cover vessel located about the outer vessel.

Preferably, although not claimed, the inlet and the outlet extend through the cover vessel at or adjacent an upper end thereof.

Preferably, although not claimed, the inlet and outlet are provided with thermal insulation between the outer vessel and the cover vessel.

Preferably, although not claimed, the space between the upper ends of the inner and outer vessels and the space between the lower ends of the inner and outer vessels are thermally insulated.

### Brief description of the drawings

The present invention will now be described with reference to the accompanying drawings, which are useful for understanding the invention:
Figures 1A to 1C illustrate schematic views of a solar water heating apparatus ;
Figure 2A illustrates a section side view of a preferred form of an apparatus ;
Figure 2B illustrates a detailed schematic view of the heat exchanger of Figure 2A;
Figure 2C illustrates a modified version of the apparatus and heat exchanger;
Figure 2D shows a further modified version of the apparatus and heat exchanger;
Figure 3 shows a second example of a solar water heating apparatus;
Figure 4 illustrates a schematic representation of the installation of the solar water heating apparatus

### Detailed description of the drawings

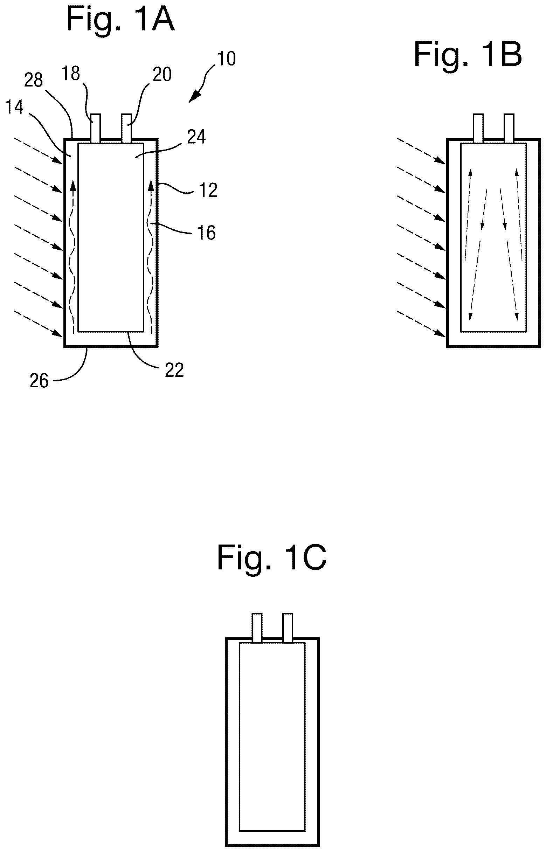

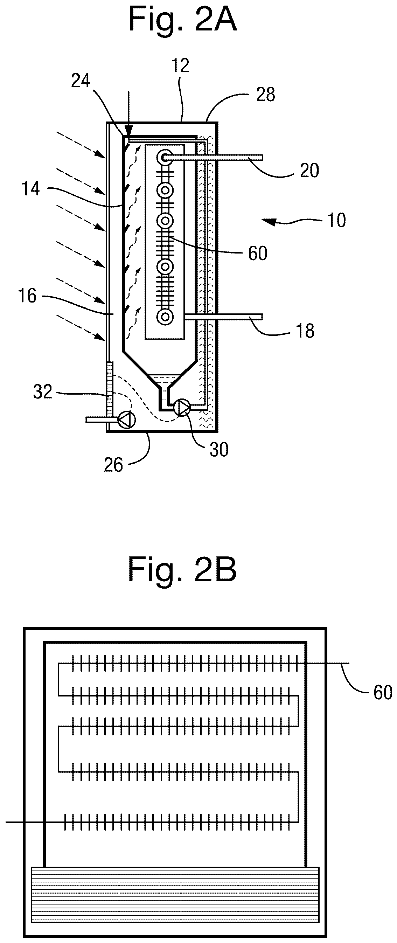

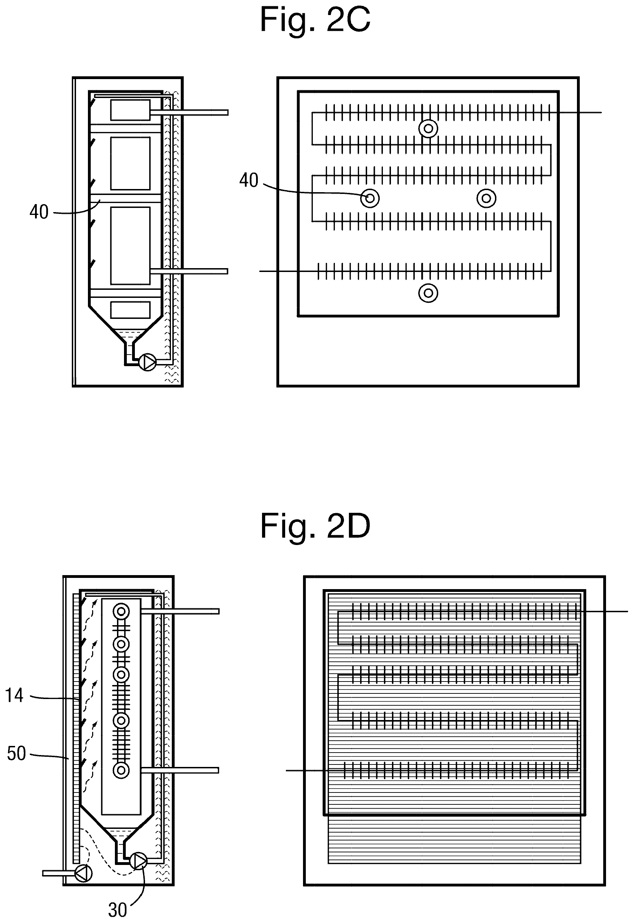

Referring now to Figures 1 and 2 of the accompanying drawings, there is illustrated a schematic view of a solar water heating apparatus, generally indicated as 10, which is adapted to effect the heating of water via solar radiation, and is particularly intended for use in the domestic market, to supplement hot water systems running on oil, gas or electricity.

The apparatus 10 comprises an outer vessel 12 which, in one embodiment, is cylindrical in form, and an inner vessel 14, again cylindrical in form in a preferred embodiment which is housed concentrically within the outer vessel 12. The vessels 12, 14 need not be cylindrical in form, and may be of any other suitable shape.

There is thus an annular cavity 16 defined between the outer vessel 12 and the inner vessel 14. In use, this cavity 16 is partially evacuated and provided with a quantity of a liquid-to-vapour phase change material (HTF), for example water or alcohol or a commercial refrigerant. In the preferred embodiment illustrated, the phase change material Is provided as water W. The purpose of the water W will be described In detail hereinafter.

A very low pressure environment (>0.05 bar) is created in the cavity, thus the heat transfer fluid (HTF) at sub-atmospheric pressure between the inner and outer walls of the store is designed to act like a thermal diode. During collection periods solar radiation incident on the outer (absorbing surface of the) vessel, causes the water to boll at low temperature thus producing a vapour. The water vapour fills the cavity and condenses on contact with colder inner (storage) vessel surface and the collected thermal energy is transferred to water store through latent heat exchange.

The apparatus 10 further comprises an inlet port 18 which is in the form of a pipe extending from an exterior of the apparatus 10, through the outer and inner vessels 12, 14, to terminate adjacent an, in use, lower end 22 of the inner vessel 14. The apparatus 10 further comprises an outlet 20 in the form of a pipe which again extends from an exterior of the apparatus 10 through the outer and inner vessels 12, 14 and terminates adjacent an upper end 24 of the inner vessel 14. In other embodiments, the inlet and outlet can terminate at different locations.

The lower and upper ends 22, 24 of the inner vessel 14 are spaced from a corresponding lower end 26 and upper end 28 of the outer vessel 12, in order to avoid conductive heat transfer between the inner and outer vessels 14, 12. The inner vessel 14 may be connected to the outer vessel 12 at the upper ends 24, 28 thereof via a coupling (not shown) which is thermally insulated, in order to prevent the conductive transfer of heat from the: inner vessel 14 to the outer vessel 12, and from there to the surrounding environment. As both the inlet 18 and outlet 20 preferably extend across the cavity 16 between the outer vessel 12 and inner vessel 14, a respective thermal break (not shown) may be provided in each of the inlet 18 and outlet 20. This thermal break again prevents the conductive transfer of heat along either the inlet 18 or outlet 20, between the inner vessel 14 and the outer vessel 12.

The apparatus 10 may also be provided with a protective transparent cover 40 which is again cylindrical in form and may be formed from clear glass or plastic or the like. A vacuum port may also be provided within the upper end 28 of the outer vessel 12, which is used to partially evacuate the cavity 16 during the manufacture of the apparatus 10 when a liquid/vapour phase-change material (or HTF) such as water is used.

A pump 30 is provided to create a supply of HTF to the absorbing inner surface of the outer vessel thereby increasing the wetted surface area and improving the evaporation process and thus heat transfer process to the inner store.

The pump is preferably a liquid suction pump more preferably a DC pump. Whilst the pump can be powered in any known way, it is preferably solar powered, e.g. by an integrated photovoltaic (PV) panel 32.

For vertically, or substantially upright mounted systems, the pump is preferably located at the base of the system and pumps the HTF to the top where it disperses downward over the inner surface of the outer housing. It is most preferred that the HTF creates a downward flow in the form of a film and this can be created, for example, by a baffle structure or spray directional device or other feature that will cause a film to form relatively evenly.

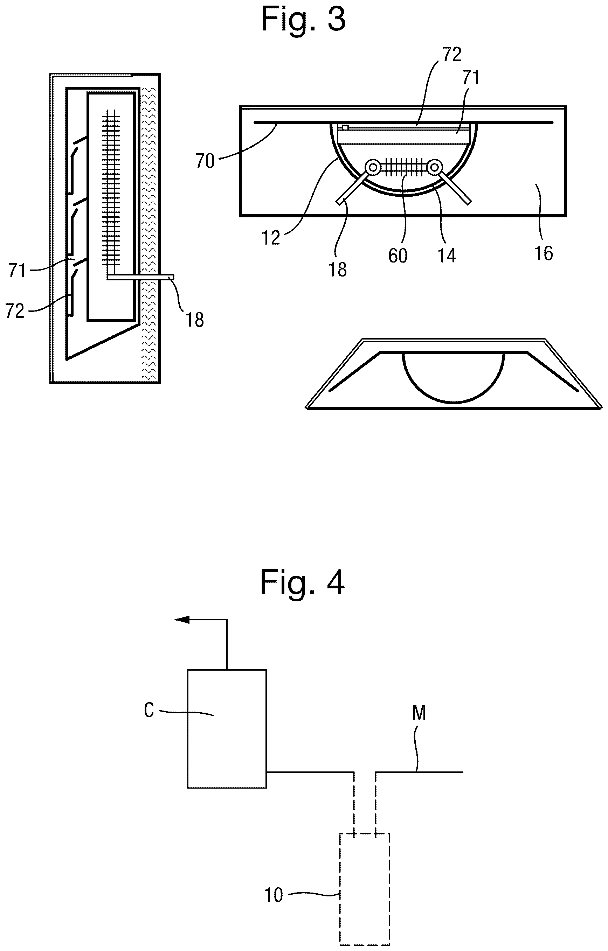

In use the apparatus 10 is mounted at a location at which solar radiation will be incident thereon, for example an exterior wall of a home or the like. To this end the apparatus 10 may be provided with a pair of brackets which are used to mount the apparatus 10 to any such suitable location. The apparatus 10 of the preferred embodiment is designed to function at its most efficient when positioned in a vertical orientation as illustrated. However, the apparatus will still function when positioned horizontally, or at an angle anywhere between horizontal and vertical. The apparatus 10, once mounted, is connected into the existing hot water system or circuit (not shown) of the building to which the apparatus 10 is mounted. In particular, the inlet 18 and outlet 20 are connected to cold water supply for the existing hot water system, such that the apparatus 10 is connected in series downstream of the, for example, hot water cylinder. Figure 4 illustrates a schematic representation of one possible configuration for the installation of the apparatus 10 into a conventional domestic hot water supply, whereby the apparatus 10 is inserted, in line, between an existing hot water cylinder C and a mains supply of cold water M supplying the cylinder C. This ensures minimum disruption and avoids the need for a new twin coil hot water cylinder.

The inner vessel 14 is thus initially filled with cold water via the inlet 18. During daylight hours, when solar radiation is incident on the apparatus 10, the outer vessel 12 will be heated. In order to maximise this heating effect, the outer face of the outer vessel 12 may be provided with a solar radiation absorbent coating or the like. In addition, the outer vessel 12 is preferably formed from a thermally conductive material such as metal, for example copper.

The phase change material or HTF - in this embodiment water W - is provided in the cavity between the vessels and the remainder of the cavity is preferably evacuated.

A substantial quantity of the water W is therefore in direct contact with the outer vessel 12. The beating of the outer vessel 12 will thus cause the water W to boil. The temperature required to boil water within the cavity 16 is significantly lower than 100°C, due to the partial vacuum within the cavity 16. For example, if the pressure within the cavity is at 0.05 bar, the temperature required to boll water is approximately 32.9°C.

The steam created by boiling of the water W will therefore contact the inner vessel 14, resulting in latent heat transfer to the store of water within the inner vessel 14, thus slowly increasing the temperature thereof. The steam in direct contact with the inner vessel 14, having undergone latent heat transfer to the water within the inner vessel 14, will condense on the outer surface on the inner vessel 14, and drain downwardly under gravity.

Thus the condensate on the outer wall of the inner vessel 14 will drain downwardly into a water reservoir at the lower end 26 of the outer vessel 12, and can be repumped to the top, thus beginning the cycle over again.

During non-collection periods, no evaporation takes place due to the partial vacuum in the annulus cavity, thereby reducing heat loss from the store.

The pump, which is preferably provided at the bottom of the apparatus, pumps the water up to the top of the cavity where the water then descends, in the form of a uniform film, covering the absorbing inner surface of the outer container. The film is caused by a baffle or spray directing structure or similar.

As the store of water within the inner vessel 14 is heated, the vertical orientation of the inner vessel 14 promotes stratification of the water. Thus warmer water will rise towards the top of the inner vessel 14 while the colder water will remain at the bottom, adjacent the inlet 18. It will therefore be appreciated that water drawn from the apparatus 10, and in particular the inner vessel 14, will be the warmest water in the inner vessel 14 as the outlet 20 terminates at the upper end 24 of the inner vessel 14. The full length inlet 18, extending to adjacent the lower end 22 of the inner vessel 14, minimises disruption to the above-mentioned thermal stratification within the inner vessel 14, as fresh cold water is supplied during use.

According to an aspect not claimed, to further increase the size of the absorbing surface, without significantly increasing the weight, thermal mass or cost of the unit (both in materials and fabrication costs), fins 70 may be provided on the absorbing surface. An example of such an embodiment is shown in Fig. 3. The fins, which are preferably lightweight and made of metal or some other solar absorbing material, are attached to the outer surface of the outer vessel to augment solar collection via conductive heat transfer. During collection periods, solar radiation incident on the outer absorbing surface of the vessel and the fins causes the heat transfer fluid to boll at low temperature, thus producing a vapour. The vapour fills the cavity and condenses on contact with the colder inner vessel surface and the collected thermal energy is transferred to the water store through latent heat exchange. The condensed water, as described above, runs down the vessel and, in some embodiments, may then be pumped back to the top of the solar absorbing surface to create a downward film flow of heat transfer fluid, improving the wetted surface area and increasing the evaporation process and, thus, heat transfer.

The efficiency of the system can be improved by providing, between the vessel wails, i.e. in the cavity, an arrangement of 'drip cowls' 71 and heat transfer fluid pockets 72 at several locations along the vertical solar absorbing surface of the outer vessel. This is shown in Fig. 3. These 'pockets' may be augmented by a capillary material, particularly for vessels having a large vertical height, to produce a greater wetted surface.

This pocket and drip cowl arrangement provides advantages in itself, but is further advantageous when combined with the pump arrangement. The combination of these arrangements is however not according to present invention.

During periods of low or no solar radiation, for example at night, the partial vacuum within the cavity 16 maintains the temperature of the store of water within the inner vessel 14. This is due to the fact that during periods where no solar radiation is incident on the outer vessel 12, no evaporation of the phase change material within the cavity 16 takes place. Thus the heat loss between the inner vessel 14 and the outer vessel 12 is significantly reduced. The lower end 26 and upper end 28 of the outer vessel 12 also are preferably heavily thermally insulated, in order to further reduce heat loss from the apparatus 10.

A further advantage of the apparatus arises from the relatively large volume of the inner vessel 14, which is preferably greater than 30 litres, and more preferably at least 50 litres in volume. The store of water contained within the inner vessel 14 will therefore have a significant thermal mass, protecting the apparatus 10 against freezing in reduced temperatures.

In another embodiment of a solar water heating apparatus (not shown), the lengthwise dimension of the inner vessel relative to the outer vessel is reduced, with the inner vessel being disposed towards the mid to upper end of the outer vessel. This allows an additional evacuated chamber to be located within the outer vessel beneath the inner vessel, the reason for which will be described in detail hereinafter.

The cavity defined between the outer and inner vessels also extends downwardly therefrom and is further defined between the outer vessel and the additional evacuated chamber. As with the apparatus 10 of the first embodiment, the cavity is partially evacuated and provided with a quantity of a phase change material, for example water or alcohol, and preferably water W.

Unlike the previous embodiment however both the inlet and outlet exit the outer vessel via a lower end thereof, as opposed to an upper end thereof. This involves reversing the outlet and passing it back downwardly from the upper end through the interior of the inner vessel, to exit the lower end thereof before extending downwardly through the evacuated chamber to exit the lower end of the outer vessel. By avoiding routing the hot water outlet through the upper end of the outer vessel it is possible to avoid or reduce conductive heat losses through the upper end of the outer vessel.

From the lower end of the inner vessel to the lower end of the outer vessel, the inlet and outlet may be located concentrically with one another, although thermal insulation is provided between the two in order to prevent heat flow from the heated water passing through the outlet to the unheated water passing through the inlet. The inlet and outlet also double as a structural support for the inner vessel, preferably via a non-conducting thermal break (not shown).

To further reduce thermal losses from the upper portion of the apparatus a divider (not shown) may be provided within the outer vessel and located between the upper end and the upper end of the inner vessel. This divider creates a buffer between the upper end and the cavity within which, as will be described hereinafter, vapour circulates to effect heat transfer between the outer vessel and the inner vessel. By reducing the amount of moisture laden vapour in contact with the upper end, less latent heat is transferred to the exterior, and thus more is transferred to the inner vessel.

By virtue of the smaller thermal capacity of the two reservoirs of the PCM, as opposed to one single reservoir having twice the capacity, the time period from liquid to vapour of the PCM is reduced, and the vaporisation process increased, thereby realising greater thermal transfer. As the chamber is evacuated there is a reduction in the back thermal loss from the lower reservoir, thus improving vaporisation of the phase change material located therein. The evacuated chamber may also be used to locate an intermediate, in line water store.

It will thus be appreciated that solar radiation incident on the outer vessel will effect the vaporisation of the water W, which then condenses on the inner vessel, effecting the transfer of thermal energy thereto, and the condensed phase change material then trickles back down the outer face of the inner vessel to be returned to the reservoirs. In order to allow the lower or upper reservoir to be continually re-supplied with this condensed phase change material, a pump is provided. This cycle is repeated continuously in order to heat the water (or other liquid) within the inner vessel.

To further reduce thermal losses from the apparatus the inlet and outlet may be routed along the exterior of the lower end, up along the length of exterior of the outer vessel, before exiting through a protective transparent cover, which is again cylindrical in form and may be formed from clear glass or plastic or the like. Along this path thermal insulation is provided to surround the inlet and the outlet pipes. This thermal insulation is also provided between the lower end of the outer vessel and the cover and the upper end and the cover.

Turning then to Figure 2A there is illustrated a solar water heating apparatus useful for understanding the present invention, generally indicated as 10.

The configuration of the apparatus 10 is essentially identical to the configuration described above, having an outer vessel 12 and a concentrically mounted inner vessel 14 for housing a store of water or other liquid, a cavity 16 being defined between the two. However the configuration differs from the apparatus shown in Figs. 1A-1C in the provision of a heat exchanger 60 which is located on the interior of the inner vessel 14, providing a closed path between an inlet 18 and an outlet 20 of the apparatus 10. In this way the apparatus 10 provides an indirect means of heating the water entering the apparatus 10 by the inlet 18, in that the water in the Inner vessel 14 is not in direct contact with the water system which feeds the apparatus 10.

The heat exchanger 60 is preferably in the form of a finned coil mounted in the inner (storage) vessel that permits heat exchange between the thermal store fluid and the domestic cold feed water, thereby creating solar pre-heating without fluid cross-over. The unit is designed to operate in the vertical position for facade mounting, but can be equally adapted to be mounted at an incline to suit roof mounting. Selective absorber coatings applied to the outer surface of the outer vessel will improve solar absorption and reduce long wave radiative heat loss. Vertical mounting of the vessel will promote thermal stratification and better heat extraction by the finned heat exchange coil.

In an improved embodiment, shown in Fig. 2C, additional structural bracing 40 can be provided to maintain the vacuum separation of the outer vessel. Because of the flat collector profile, a series of pillars 40 can be provided to provide structural panel bracing between the front and rear surface panels of the outer vessel. Due to the internal low pressure environment, external atmospheric pressure can tend to cause the vessel walls to bow inwards. By providing pillar bracing by means of, for example, strategically located tubular channels in the inner vessel, the structural profile can be maintained, but without using any elements that would lead to conductive thermal bridging from the inner to the outer vessel.

Another modification is shown in Fig. 2D, which extends the benefit of using photovoltaic (PV) modules. A suitable PV element, for example using thin film technology, may be bonded to the front panel of the outer absorbing vessel. The advantages of this enhancement are twofold, although an increase in the overall unit cost may result. Firstly, preferably the entire exposed outer absorbing surface is covered with PV cells/module 50, thereby increasing the electrical output. The electricity generated is now much greater than that necessary for the pumps and therefore can be supplied to the dwelling to supplement an existing electrical load. Secondly, an almost symbiotic relationship exists between the thermal requirements and electrical generation. As the PV (and therefore absorbing surface) increases in temperature, a drop in the PV performance will result. however, at the predetermined temperature (governed by the characteristics of the inner heat transfer 'working' fluid and pressure), the heat transfer fluid will begin to boil and change from a liquid to a vapour, effectively an isothermal process. This heat extraction will stop the PV temperature from rising (thus maintaining electrical performance) whilst still permitting heat transfer to the inner store.

Whilst the schematic drawings illustrate flat panel designs, the PV enhancement and pumped HTF spray features can be equally applied to tubular, triangular or other appropriate vessel shapes.

Existing hybrid solar PVT (Photovoltaic/Thermal) collectors are hampered by the requirement that the collector heat transfer fluid must attain the highest output temperature possible to maximise thermal performance, whilst PVs perform better at ambient temperatures and thus better electrical performance. In the enhanced PV design flat profile (pumped HTF) pre-heat collector, the lower operating HTF temperatures and: pre-heat mode of installation ensure that PV performance is not sacrificed, whilst useful thermal energy collection is still maintained.

The apparatus may include a removable water reservoir (not shown) which Is mounted above outer and inner vessels of the apparatus, and which supplies a lower end of the inner vessel via a temporary feed pipe which Is connected with an inlet of the apparatus. The apparatus further includes an outlet extending from an upper end of the inner vessel, from which heated water may be withdrawn from the inner vessel. The water fed into the inner vessel from the reservoir is heated in the same manner as described above with reference to the previous embodiments.

The double vessel solar collector unit is preferably encased in a weather tight enclosure. The sides and back are made from an appropriate insulated, opaque casing material and the front is made of a suitable transparent aperture material. A small, preferably DC, suction pump/fan, preferably powered directly via the PV panel, reduces the air pressure in the casing cavity during solar collection, thereby reducing convective motion and decreasing heat loss and improving thermal performance.

The apparatus may also be mounted on castors (not shown) or the like, in order to render the entire apparatus portable. It will therefore be appreciated that the apparatus may be wheeled to a desired location, and simply left in a free standing position in order to be exposed to solar radiation in order to heat the water contained within the inner vessel. As heated water is withdrawn from the inner vessel, water from the reservoir is fed, preferably under gravity, through the feedpipe to the inlet, in order to replenish the water within the inner vessel, or via the heat exchanger.

The apparatus of the present invention thus provides a simply yet effective means of heating a store of water via solar radiation, which can then be fed to the hot water cylinder of an existing hot water system, or used directly for any other purpose. This thus significantly reduces the energy required to heat the water to a level suitable for use in domestic or other applications.

The apparatus offers a simple preheating arrangement. The apparatus will not produce as much hot water as a traditional system distributed solar water heater installation, but at a fraction of the cost, will be more cost effective, reducing the payback period to less than seven years. The system also offers substantial benefits due to its installation requirements, opening the solar water heating installation to the DIY market. The apparatus is installed by mounting on an equator facing wall and connecting the inlet and outlet pipework into the cold feed for the existing hot water cylinder (HWC). This procedure avoids the costly need for a new twin coil HWC, pump, pipework and valves, freeze protection measures, controls and roof mounting assembly. In addition, the apparatus minimises damage to the building structure, with only a small plumbing procedure, two holes for inlet and outlet pipework through the roof sofit and two brackets for the mounting. Also, by opting for a wall fixture, the mounting locations for the apparatus are increased. The traditional solar water heater mounting on a sloped roof has only two mounting options, depending on the building orientation.

Accordingly, systems need to be be designed that maximise insolation collection while minimising heat loss, and optimised such that the maximum solar savings fraction (energy collection, storage and delivery temperature) for specified load profiles can be achieves at minimum reasonable cost.

## Claims

1. A solar heating apparatus for water (10) comprising inner (14) and outer (12) concentrically arranged vessels; a cavity (16) defined between the vessels by an outer wall of the inner vessel and an inner wall of the outer vessel; a liquid-to-vapour phase change material provided in the cavity; an inlet (18) for delivering unheated water to the inner vessel; and an outlet (20) for withdrawing heated water from the inner vessel, wherein the inlet (18) feeds into a lower portion of the inner vessel (14) and the outlet (20) is provided at an upper portion of the inner vessel, and wherein the outlet (20) returns through the inner vessel (14) before exiting a lower end of the outer vessel (12), **characterised by** comprising means (30) for pumping the phase change material towards the inner wall of the outer vessel.

2. The apparatus of claim 1, wherein the liquid-to-vapour change material is water.

3. The apparatus of claim 1 or 2, wherein the means (30) for pumping is a liquid suction pump, and preferably wherein the pump is a DC liquid suction pump.

4. The apparatus of any of claims 1 to 3, wherein the means (30) for pumping is solar powered.

5. The apparatus of claim 4, wherein the means (30) for pumping is powered by means of an integral photovoltaic panel.

6. The apparatus of any of claims 1 to 5, wherein the means (30) for pumping is located towards the base of the apparatus and pumps the liquid form phase change material towards the top of the apparatus.

7. The apparatus of any preceding claim, further comprising at least one reservoir within the cavity (16) and within which reservoir at least a portion of the phase change material may be retained or redirected to improve the heat transfer and evaporation process, and preferably comprising an evacuated compartment disposed within the inner vessel (14) and defining at least one of the reservoirs between the compartment and an inner face of the outer vessel (12), by direct flow or via a heat exchange mechanism.

8. The apparatus of any preceding claim, further comprising a heat exchanger (60) connected between the inlet (18) and the outlet (20).

9. The apparatus of any preceding claim, wherein a solar radiation absorbent coating is provided on an outer face of the outer vessel (12).

10. The apparatus of any preceding claim, further comprising a transparent cover vessel (40) located about the outer vessel (12).

## Patentansprüche

1. Solarheizeinrichtung für Wasser (10), umfassend konzentrisch eingerichtete innere (14) und äußere (12) Kessel; einen Hohlraum (16), der zwischen den Kesseln durch eine Außenwand des Innenkessels und eine Innenwand des Außenkessels definiert ist; ein Flüssig-zu-Gasphasen-Änderungsmaterial, das in dem Hohlraum bereitgestellt ist; einen Einlass (18) zum Zuführen unerhitzten Wassers zu dem Innenkessel; und einen Auslass (20) zum Entnehmen von erhitztem Wasser aus dem Innenkessel, wobei der Einlass (18) in einen unteren Abschnitt des Innenkessels (14) führt und der Auslass (20) bei einem oberen Abschnitt des Innenkessels bereitgestellt ist, und wobei der Auslass (20) durch den Innenkessel (14) zurückführt, bevor er bei einem unteren Ende des Außenkessels (12) herausführt, **dadurch gekennzeichnet, dass** sie Mittel (30) zum Pumpen des Phasenänderungsmaterial zu der Innenwand des Außenkessels umfasst.

2. Einrichtung nach Anspruch 1, wobei das Flüssig-zu-Gasphasen-Änderungsmaterial Wasser ist.

3. Einrichtung nach Anspruch 1 oder 2, wobei das Mittel (30) zum Pumpen eine Flüssigsaugpumpe ist und bevorzugt, wobei die Pumpe eine Gleichstromflüssigsaugpumpe ist.

4. Einrichtung nach einem der Ansprüche 1 bis 3, wobei das Mittel (30) zum Pumpen solarbetrieben ist.

5. Einrichtung nach Anspruch 4, wobei das Mittel (30) zum Pumpen mittels eines integrierten Photovoltaikpaneels betrieben ist.

6. Einrichtung nach einem der Ansprüche 1 bis 5, wobei das Mittel (30) zum Pumpen in Richtung der Basis der Einrichtung liegt und das flüssige Phasenänderungsmaterial zu der Oberseite der Einrichtung pumpt.

7. Einrichtung nach einem vorstehenden Anspruch, weiter umfassend mindestens einen Behälter innerhalb des Hohlraums (16) und innerhalb welchen Behälters mindestens ein Abschnitt des Phasenänderungsmaterials aufbewahrt oder umgelenkt werden kann, um den Wärmeübertragungs- und Verdampfungsprozess zu verbessern, und bevorzugt umfassend ein evakuiertes Abteil, das innerhalb des Innenkessels (14) angeordnet ist und mindestens einen der Behälter zwischen dem Abteil und einer Innenfläche des Außenkessels (12) definiert, durch direkten Fluss oder über einen Wärmeaustauschmechanismus.

8. Einrichtung nach einem vorstehenden Anspruch, weiter umfassend einen Wärmetauscher (60), der zwischen dem Einlass (18) und dem Auslass (20) verbunden ist.

9. Einrichtung nach einem vorstehenden Anspruch, wobei eine solarstrahlungsabsorbierende Beschichtung an einer Außenfläche des Außenkessels (12) bereitgestellt ist.

10. Einrichtung nach einem vorstehenden Anspruch, weiter umfassend einen durchsichtigen Abdeckkessel (40), der um den Außenkessel (12) liegt.

## Revendications

1. Appareil de chauffage solaire pour de l'eau (10) comprenant des récipients intérieur (14) et extérieur (12) agencés de manière concentrique ; une cavité (16) définie entre les récipients par une paroi extérieure du récipient intérieur et une paroi intérieure du récipient extérieur ; un matériau à changement de phase liquide-vapeur fourni dans la cavité ; une entrée (18) pour distribuer de l'eau non chauffée au récipient intérieur ; et une sortie (20) pour retirer l'eau chauffée du récipient intérieur, dans lequel l'entrée (18) s'introduit dans une partie inférieure du récipient intérieur (14) et la sortie (20) se trouve au niveau d'une partie supérieure du récipient intérieur, et dans lequel la sortie (20) revient à travers le récipient intérieur (14) avant de sortir d'une extrémité inférieure du récipient extérieur (12), **caractérisé en ce qu'**il comprend un moyen (30) pour pomper le matériau à changement de phase vers la paroi intérieure du récipient extérieur.

2. Appareil selon la revendication 1, dans lequel le matériau à changement de phase liquide-vapeur est de l'eau.

3. Appareil selon la revendication 1 ou 2, dans lequel le moyen (30) de pompage est une pompe d'aspiration de liquide, et de préférence dans lequel la pompe est une pompe d'aspiration de liquide CC.

4. Appareil selon l'une quelconque des revendications 1 à 3, dans lequel le moyen (30) de pompage est à alimentation solaire.

5. Appareil selon la revendication 4, dans lequel le moyen (30) de pompage est alimenté à l'aide d'un panneau photovoltaïque intégré.

6. Appareil selon l'une quelconque des revendications 1 à 5, dans lequel le moyen (30) de pompage est situé vers la base de l'appareil et pompe le liquide depuis le matériau à changement de phase vers le haut de l'appareil.

7. Appareil selon une quelconque revendication précédente, comprenant en outre au moins un réservoir dans la cavité (16) et dans lequel réservoir au moins une partie du matériau à changement de phase peut être retenue ou redirigée pour améliorer le processus d'évaporation et de transfert de chaleur, et comprenant de préférence un compartiment évacué disposé dans le récipient intérieur (14) et définissant au moins l'un des réservoirs entre le compartiment et une face intérieure du récipient extérieur (12), par écoulement direct ou via un mécanisme d'échange de chaleur.

8. Appareil selon une quelconque revendication précédente, comprenant en outre un échangeur de chaleur (60) raccordé entre l'entrée (18) et la sortie (20).

9. Appareil selon une quelconque revendication précédente, dans lequel un revêtement d'absorption de rayonnement solaire se trouve sur une face extérieure du récipient extérieur (12).

10. Appareil selon une quelconque revendication précédente, comprenant en outre un récipient de protection transparent (40) situé autour du récipient extérieur (12).
